# EUROPEAN PATENT APPLICATION

(11) **EP 4 832 022 A1**
(43) Date of publication of application: **28.10.2026**
(21) Application number: 26170101.5
(22) Date of filing: 31.03.2026
(51) Int. Cl.: H01F 1/08, H01F 1/055, H01F 1/057

(54) **MAGNETIC ADHESIVE FOR MOTOR ROTOR THAT IMPROVES MAGNETIC FLUX AT HIGH TEMPERATURES, AND THE MOTOR ROTOR**

(30) Priority: 21.04.2025 CN 202510495325
(71) Applicant: Hysol Huawei Electronics Co., Ltd., Jiangsu 222006 (CN)
(72) Inventor: GUO, Shaojie, Lianyungang, 222006 (CN); LI, Chaohui, Lianyungang, 222006 (CN); CAO, Erping, Lianyungang, 222006 (CN); XING, Hongjie, Lianyungang, 222006 (CN); TAO, Jun, Lianyungang, 222006 (CN)
(74) Representative: Bayramoglu et al.

(57) **Abstract**

The invention relates to the field of motor adhesives, and particularly to a magnetic adhesive for motor rotor that improves magnetic flux at high temperatures, as well as the motor rotor. The magnetic adhesive for motor rotor comprises the following percent by weight of raw materials: 5-15 percent of epoxy resin, 1-3 percent of phenolic resin, 0.5-2 percent of curing accelerator, 15-30 percent of fused spherical silica, 40-60 percent of fused angular silica, 4-10 percent of fine silica, 1-3 percent of silane coupling agent and 3-30 percent of magnetic powder; the D50 of the fused spherical silica is 5-9 µm, the D50 of the fused angular silica is 15-21 µm, and the specific surface area of the fine silica is 230-280 m²/g. In the invention, magnetic powder as part of a solid filler works with a specific-sized silica filler to improve the overall high-temperature magnetic flux of the material while maintaining good mechanical strength.

## Description

### TECHNICAL FIELD

The present invention relates to the field of motor adhesives, and particularly to a magnetic adhesive for motor rotor that improves magnetic flux at high temperatures, as well as the motor rotor.

### BACKGROUND ART

Under the global orientation towards green energy, the gradual maturity of technologies in the new-energy vehicle industry chain has provided consumers with more excellent options. For most new energy vehicles, the methods for fixing permanent magnet motors, magnetic steel and iron cores are key processes. The common methods include glue fixation, injection molding fixation and rivet fixation. Glue fixation is the early method. Magnetic steel is fixed inside the rotor core by epoxy adhesive. However, the fixation is unstable, and the strength lost over time is significant. This method has basically been abandoned and might be used only in small-scale prototyping experiments. Injection molding fixation is a new technology emerging in recent years. By injecting an injection molding material around the magnetic steel, fixation is achieved, providing more stable performance. The mainstream magnetic fixing materials for motor rotors in the market include Sumitomo M500A and Azon 8200TM. With the rise of new energy vehicles and the improvement of the performance of electric vehicles, the demand for torque provided by the motor is increasing significantly. Especially when the motor speed exceeds 17,000rpm, thermosetting materials have become the preferred choice for fixing the magnetic steel. Fixing the motor rotor with epoxy resin is a common method. The thermosetting epoxy resin has good toughness, impact resistance, vibration resistance and corrosion resistance, and also has an excellent bonding effect. Therefore, it has a wide range of applications. However, the filling process of the epoxy resin will result in a loss of the magnetic flux of the rotor, and its application in some scenarios is limited. Currently, there is no fixing method that can increase the magnetic flux of the rotor. Theoretically, if magnetic powder with high magnetic permeability is directionally added to an epoxy molding compound (EMC), it may enhance the continuity of the magnetic circuit, thereby increasing the overall magnetic flux density. However, through experiments, it was found that directly adding magnetic powder had little effect on increasing the magnetic flux. There could be many possible reasons. For example, the interface bonding strength and dispersion uniformity between the magnetic powder and the epoxy resin have a direct bearing on the stability of the magnetic permeability; it could also be due to the fluidity of non-magnetic fillers, the dense packing method, etc., which all have an impact on the magnetic flux.

CN103081301B discloses a rotor, which comprises a rotor core, fixedly arranged on a rotating shaft, and having multiple orifice portions arranged along the peripheral portion of the rotating shaft; magnets, inserted into the orifice portions; a fixing component, which is formed by curing a composition filled into a separation portion between the orifice portions and the magnets for fixation, and arranged on the side walls of the magnets and located at least on the side wall of the inner peripheral side of the rotor core, to fix the magnets; the resin composition for fixation contains: a thermosetting resin (A) containing epoxy resin, a curing agent (B), and an inorganic filler (C); relative to the total value of the resin composition for fixation as 100 percent by weight, the content of the inorganic filler (C) is 50 percent by weight or more, and relative to the resin composition for fixation, the concentration of ionic impurities is 500ppm or less. The ionic impurities are at least one or more of alkali metal ions, alkaline earth metal ions, and halide ions. CN104136532A discloses a resin composition for rotor fixation, which comprises a thermosetting resin containing epoxy resin, a curing agent, and an inorganic filler; the epoxy resin includes at least one of biphenyl type epoxy resin, phenolaralkyl type epoxy resin, linear phenolic formaldehyde type epoxy resin, ortho-cresol linear phenolic formaldehyde type epoxy resin, diphenolic type epoxy resin, dinaphthalene type epoxy resin, dicyclopentadiene type epoxy resin, dihydroanthrone type epoxy resin, and triphenylmethane type epoxy resin; the curing agent includes at least one of linear phenolic resin, phenolaralkyl resin, naphthalene type phenolic resin, and phenolic resin obtained from the reaction of hydroxybenzaldehyde, formaldehyde and phenol. CN102408545A discloses a resin composition for sealing a rare earth permanent magnet coreless motor, which comprises epoxy resin, phenolic resin, a curing accelerator, a coupling agent, a stress release agent, a coloring agent, a flame retardant, a release agent, an inorganic filler and a glass fiber filler.

However, none of the aforementioned existing technologies have solved the defect that the material used to fix the motor rotor can hardly increase the rotor's magnetic flux. Specifically, since the actual operating temperature of the rotor is in a high-temperature range of 140-180°C, it is even more difficult to increase the magnetic flux in such a high-temperature environment. Regarding the use of such fixing materials, the performance tests conducted at high temperatures can truly reflect the actual situation in the use of real new energy vehicles. Therefore, it is necessary to re-evaluate the various properties of the rotor fixing materials at high temperatures, and to provide a feedback closer to the realistic service environment, so as to make targeted improvements to the fixing materials.

### SUMMARY OF THE INVENTION

An object of the present invention is to provide a motor rotor adhesive that can increase the rotor's magnetic flux without affecting other properties, so that the rotor as a whole has better magnetization performance, expanding the application scope of epoxy resin-fixed rotors, especially in improving the magnetic flux characteristics at high temperatures. In order to achieve the foregoing object, the present invention provides the following technical solution: A magnetic adhesive for motor rotor that improves magnetic flux at high temperatures, wherein the magnetic adhesive comprises the following percent by weight of raw materials: 5-15 percent of epoxy resin, 1-3 percent of phenolic resin, 0.5-2 percent of curing accelerator, 15-30 percent of fused spherical silica, 40-60 percent of fused angular silica, 4-10 percent of fine silica, and 3-30 percent of magnetic powder; the D50 of the fused spherical silica is 5-9 µm, the D50 of the fused angular silica is 15-21 µm, and the specific surface area of the fine silica is 230-280 m²/g. Epoxy resin is used to provide the cohesion and bonding strength of the system, so that the system has sufficient bonding performance and plays a major fixation effect. The filler component is mainly inorganic particles. Under the action of the fixing component, the filler component in the present invention can form an overall strength, providing support, hardness and stiffness. Adding magnetic powder can achieve an effect of increasing the magnetic flux and enable the rotor to have better magnetic flux and magnetic induction performance after being fixed, thereby enhancing the overall magnetism of the rotor and reducing the loss of the fixing material on the rotor and the interference of the curing material in magnetism. Compared with the fixing methods using magnetic powder slurry or magnetic steel, the method provided by the present invention has a simpler process, requires a lower processing temperature, and the material has good stiffness and is not prone to degradation. It can withstand higher rotational speeds, thus showing a better application prospect.

Further, the magnetic powder comprises at least one of sintered neodymium iron boron (NdFeB) material and samarium cobalt (SmCo) material. The sintered NdFeB material is obtained by calcining an NdFeB material at 1100-1300°C for 3-5 h, and then tempering it at 500-600°C for 1-2 h. The purpose of calcination is to bond and densify the powder particles to eliminate pores, form a high-density magnet, and enhance mechanical strength; the purpose of tempering is to adjust the phase distribution of grain boundaries.

The inventor discovered that directly adding a small amount of magnetic powder to the epoxy resin thermosetting system cannot increase the magnetic flux of the fixing material as expected. The possible reasons are that the magnetic powder has poor dispersibility, the orientation has not reached the ideal state, the magnetic flux distribution is uneven, and there is local demagnetization; or that the fluidity of silica is poor, making it difficult to achieve the goal of increasing the magnetic flux. Further, the inventor also discovered that at high temperatures, the contribution of adding magnetic powder to the magnetic flux is much less. If a large amount of magnetic powder needs to be added in order to achieve the desired increase in magnetic flux, it will result in a significant increase in the cost of such materials and a decline in their industrial practical value. Therefore, achieving a high increase in magnetic flux by adding a low amount of magnetic powder is an urgent need. The addition of magnetic powder in a high-temperature environment has a limited effect on increasing the magnetic flux. This is because magnetic powder will demagnetize at high temperatures, and the coefficient of thermal expansion of silica at temperatures above 150°C does not match epoxy resin and magnetic materials, causing the fixing structure that fixes the magnetic powder to become loose, disrupting the original orientation structure and resulting in a decrease in magnetic flux. Increasing the Tg of epoxy resin can alleviate this phenomenon, but it means an increase in the crosslinking density of the epoxy resin, making the material more rigid and resulting in reduced toughness. It is prone to fatigue failure under high and low temperature cycling loads, and has a negative effect on the long-term stability of the rotor fixing material. Therefore, it is not advisable to unilaterally increase the Tg of epoxy resin. Moreover, the epoxy resin currently in use is mostly commercial products, and it is not an easy task to find an appropriate epoxy resin with a high Tg. Therefore, the use of the existing epoxy resin can also mitigate the adverse effects of the epoxy resin thermosetting rotor fixing material on the magnetic flux at high temperatures. This is of great significance and commercial value. The inventor discovered unexpectedly that the compounding of three non-magnetic fillers, namely: fused spherical silica, fused angular silica, and fine silica of different sizes, in a synergistic manner, can improve the effect of the magnetic powder in enhancing magnetic flux at high temperatures. The addition of the magnetic powder at as low as 3wt% of the fixing material can significantly improve the magnetic flux. However, if the above-mentioned compounded non-magnetic fillers are not used, the addition as high as 10wt% will be needed in order to show an appropriate improvement in magnetic flux. The three fillers are all common and cheap reagents available on the market that can be purchased commercially and make for the industrial application of the fixing material in the present invention. The reasons for the increase in magnetic flux through the compounding of the current three fillers remain unclear. Possible reasons include that the compounded non-magnetic fillers have appropriate fluidity, and spherical silica and angular silica of appropriate sizes and proportions are matched. Among them, the spherical silica particles typically are densely stacked more easily than the angular particles are, which improve the overall density, making the magnetic powder more compact, reducing the spacing, and increasing the magnetic flux; the angular silica forms a supporting structure, reduces sedimentation and improves the arrangement of the magnetic powder, and the rough surface of the angular silica also helps with the interaction with the resin. The addition of fine silica, in collaboration with spherical/angular silica fillers, forms a multi-scale filling structure, further reducing the interface stress concentration caused by a single particle size. However, the amount of fine silica powder added needs to be strictly controlled; otherwise, it will have an adverse effect. The match of spherical silica and angular silica of appropriate sizes and proportions also needs to consider the cooperation with resin fluidity. In the present invention, a certain proportion of silane coupling agent is also added, which can enhance the affinity between the resin and silica, and improve the interface bonding between the magnetic powder and the resin.

Further, the magnetic adhesive for motor rotor comprises the following percent by weight of raw materials: 9-13 percent of epoxy resin, 1.2-1.7 percent of phenolic resin, 0.8-1.3 percent of curing accelerator, 18-26 percent of fused spherical silica, 45-55 percent of fused angular silica, 5-8 percent of fine silica, 1-3 percent of silane coupling agent and 5-20 percent of magnetic powder.

Preferably, the magnetic powder is a mixture of a sintered NdFeB material and a SmCo material; and when the mixture of the sintered NdFeB material and the SmCo material is added, the raw materials of the magnetic fixing material for motor rotor also include 2.2-3.0 percent by weight of boron nitride nanosheets.

More preferably, in the magnetic powder, the mass ratio of the sintered NdFeB material to the SmCo material is 1:1-3; the size of the boron nitride nanosheets is 100-500 nm, and its thickness is 10-50 nm; more preferably, the size of the boron nitride nanosheets is 100-200 nm, and its thickness is 10-30 nm.

The NdFeB material has strong magnetism, high stiffness and a low coefficient of thermal expansion, but a low Curie temperature, and poor temperature stability and is prone to demagnetization at high temperatures; besides, the NdFeB material is susceptible to oxidation, so a passivation layer is formed on the surface after sintering. The SmCo material has good temperature stability and corrosion resistance. The two materials have their own unique properties. However, the NdFeB material and the SmCo material cannot be added at the same time in general. Otherwise, the disadvantages of the characteristics will be highlighted, while their advantages will not be apparent. The inventor discovered unexpectedly that adding a small amount of boron nitride nanosheets enabled the matched use of these two types of magnetic powder, and can increase the magnetic flux at high temperatures without causing any adverse effects. The inventor speculated that the possible reasons could be that the boron nitride nanosheets act as a rheological regulator and disperse in the resin to form a thixotropic network; it could also be because the coefficient of thermal expansion of boron nitride is close to that of neodymium iron boride, which can reduce the interface's thermal stress during the curing and cooling process; or both factors play a role.

Further, the epoxy resin is at least one of phenolic epoxy resin, bisphenol type epoxy resin, biphenyl-type epoxy resin, and bis-cyclopentadiene type epoxy resin; the phenolic resin is at least one of linear phenolic resin, biphenyl type phenolic resin, naphthalene type phenolic resin, polyphenylene nitrile type phenolic resin, and arylalkylphenol type phenolic resin; the curing accelerator is selected from imidazole type accelerator (such as 2-methylimidazole and 2-ethyl-4-methylimidazole), tertiary amine type accelerator (such as triethylamine), and 1,8-diazabicyclo[5.4.0]undec-7-ene.

The silane coupling agent is an epoxy silane coupling agent, such as γ-glycidyl ether oxypropyl triethoxysilane.

Further, the magnetic adhesive for motor rotor that improves magnetic flux at high temperatures further comprises the following percent by weight of excipients: 0-2 percent of ion catcher, 0-2 percent of release agent, 0-5 percent of flame retardant, 0-2 percent of toughening agent, and 0-5 percent of coloring agent, and the percent by weight of the foregoing excipients are not all 0; preferably, 0.1-1 percent by weight of ion catcher, and/or 0.1-1 percent by weight of release agent, and/or 1-5 percent by weight of flame retardant, and/or 0.1-1 percent by weight of toughening agent, and/or 1-3 percent by weight of coloring agent. The doses and types of the excipients are well known to those skilled in the art. For example, the ion catcher is selected from alumina, magnesium oxide or their compositions; the release agent is selected from lignite wax, aliphatic ester, organic silicone oils or their combinations; the flame retardant is selected from metal hydroxides, oxides of organic phosphorus compounds or their combinations; the toughening agent is selected from carboxylated-terminated liquid acrylonitrile rubber, hydroxyl-terminated liquid nitrile rubber, amino-terminated liquid nitrile rubber, liquid polyether diol, liquid polyoxy silane or their combinations; the coloring agent is selected from carbon black, iron oxide yellow, and benzidine orange. In a preferred technical solution of the present invention, the total weight of the excipients does not exceed 10wt% of the magnetic fixing material for motor rotor.

The present invention further provides a method for preparing the foregoing magnetic adhesive for motor rotor that improves magnetic flux at high temperatures according, wherein the method comprises the following steps:
weighing the raw materials according to their percent by weight, mixing them evenly in an inert atmosphere to obtain powder, heating and molding it, and crushing it to obtain a powder product with a particle size of 1-10 mm; preferably, the particle size of the powder product is 3-5 mm.

The present invention further provides a motor rotor, wherein the motor rotor comprises a rotor body, magnetic steel, and the magnetic adhesive for fixing the rotor body and the magnetic steel. By utilizing the magnetic flux formed after the material is magnetized, the interference caused by the fixing material in the motor can be effectively reduced.

### BRIEF DESCRIPTION OF THE DRAWINGS

FIG. 1 shows a photo of a cylindrical cake formed by compressing adhesive powder;
FIG. 2 shows an overall photo of the motor rotor after being fixed with adhesive.

### DETAILED DESCRIPTION OF THE EMBODIMENTS

The solution in the present invention is further elaborated by referring to the following specific embodiments.

### Experiment 1

In this embodiment, the influence of the presence of magnetic powder in the filler component on the system was mainly verified, involving embodiments containing magnetic powder and comparative examples not containing magnetic powder. The proportion of each component is shown in Table 1.

The D50 of the fused spherical silica was 6.2 µm, the D50 of the fused angular silica was 17.8 µm, and the BET of the fine silica was 240 m²/g. The sintered NdFeB magnetic powder was obtained by calcining the NdFeB material at 1200°C for 3 h, and then tempering it at 600°C for 2 h.

**Table 1 Formula of the Magnetic Adhesive for Motor Rotor**

| Component (pbw) | Compara tive example 1 | Comparat ive example 2 | Compar ative example 3 | Compar ative example 4 | 1-1 | 1-2 | 1-3 | 1-4 |
|---|---|---|---|---|---|---|---|---|
| Epoxy resin 1 | 9.88 | 9.88 | 9.88 | 9.88 | 9.88 | 9.88 | 9.88 | 9.88 |
| Epoxy resin 2 | 2.00 | 2.00 | 2.00 | 2.00 | 2.00 | 2.00 | 2.00 | 2.00 |
| Phenolic resin 1 | 0.40 | 0.40 | 0.40 | 0.40 | **-** | **1.20** | **0.60** | **0.40** |
| Phenolic resin 2 | 0.80 | 0.80 | 0.80 | 0.80 | **1.20** | **-** | **0.60** | **0.80** |
| Curing accelerator | 0.14 | 0.14 | 0.14 | 0.14 | 0.14 | 0.14 | 0.14 | 0.14 |
| fused spherical silica | 21 | **0** | 71 | 21 | 21 | 21 | 21 | 21 |
| fused angular silica | 50 | 71 | **0** | 50 | 50 | 50 | 50 | 50 |
| fine silica | 6 | 6 | 6 | **0** | 6 | 6 | 6 | 6 |
| Sintered NdFeB magnetic powder | **0** | 5 | 5 | 5 | 5 | 5 | 5 | 5 |
| SmCo magnetic powder | - | - | - | - | - | - | - | - |
| Silane coupling agent | 1.5 | 1.5 | 1.5 | 1.5 | 1.2 | 1.2 | 1.2 | 1.5 |
| Ion catcher | 0.47 | 0.47 | 0.47 | 0.47 | 0.47 | 0.47 | 0.47 | 0.47 |
| Release agent | 1.18 | 1.18 | 1.18 | 1.18 | 1.18 | 1.18 | 1.18 | 1.18 |
| Flame retardant | 3.00 | 3.00 | 3.00 | 3.00 | 3.00 | 3.00 | 3.00 | 3.00 |
| Coloring agent | 0.30 | 0.30 | 0.30 | 0.30 | 0.30 | 0.30 | 0.30 | 0.30 |
| Toughening agent | 0.15 | 0.15 | 0.15 | 0.15 | 0.15 | 0.15 | 0.15 | 0.15 |
| Component (pbw) | 1-5 | 1-6 | 1-7 | 1-8 | 1-9 | 1-10 | 1-11 | 1-12 |
| Epoxy resin 1 | 9.88 | 9.88 | 9.88 | 9.88 | 9.88 | 9.88 | 9.88 | 9.88 |
| Epoxy resin 2 | 2.00 | 2.00 | 2.00 | 2.00 | 2.00 | 2.00 | 2.00 | 2.00 |
| Phenolic resin 1 | **0.65** | **0.90** | 0.40 | 0.40 | 0.40 | 0.40 | 0.40 | 0.40 |
| Phenolic resin 2 | **1.05** | **0.50** | 0.80 | 0.80 | 0.80 | 0.80 | 0.80 | 0.80 |
| Curing accelerator | 0.14 | 0.14 | 0.14 | 0.14 | 0.14 | 0.14 | 0.14 | 0.14 |
| fused spherical silica | 21 | 21 | 21 | 21 | 21 | 21 | 21 | 21 |
| fused angular silica | 50 | 50 | 50 | 50 | 50 | 50 | 50 | 50 |
| fine silica | 6 | 6 | 6 | 6 | 6 | 6 | 6 | 6 |
| Sintered NdFeB magnetic powder | 5 | 5 | **10** | **15** | **20** | **30** | **0** | **10** |
| SmCo magnetic powder | - | - | **-** | **-** | **-** | **-** | **10** | **-** |
| Boron nitride nanosheets | 0 | 0 | 0 | 0 | 0 | 0 | 0 | 0 |
| Silane coupling agent | 1.7 | 2.0 | 1.5 | 1.5 | 1.5 | 1.5 | 1.5 | **0** |
| Ion catcher | 0.47 | 0.47 | 0.47 | 0.47 | 0.47 | 0.47 | 0.47 | 0.47 |
| Release agent | 1.18 | 1.18 | 1.18 | 1.18 | 1.18 | 1.18 | 1.18 | 1.18 |
| Flame retardant | 3.00 | 3.00 | 3.00 | 3.00 | 3.00 | 3.00 | 3.00 | 3.00 |
| Coloring agent | 0.30 | 0.30 | 0.30 | 0.30 | 0.30 | 0.30 | 0.30 | 0.30 |
| Toughening agent | 0.15 | 0.15 | 0.15 | 0.15 | 0.15 | 0.15 | 0.15 | 0.15 |

In the above Table 1, the coloring agent is carbon black, the final product is black, the ion catcher is alumina, epoxy resin 1 and epoxy resin 2 are two different types of o-cresol-type epoxy resin, of which epoxy resin 1 is NPCN-704 (Nan Ya Plastics Corp.) and epoxy resin 2 is Nan Ya NPCN-703 (Nan Ya Plastics Corp.). Phenolic resin 1 is bisphenol A type phenolic resin, and phenolic resin 2 is polyphenylene nitrile type phenolic resin. The curing accelerator is 1,8-diazabicyclo[5.4.0]undec-7-ene (DBU), the coloring agent is carbon black, the ion catcher is alumina, the toughening agent is carboxylated- terminated liquid acrylonitrile rubber, the flame retardant is resorcinol bis(diphenyl phosphate), the release agent is propyl fumarate, and the silane coupling agent is γ-glycidyl ether oxypropyl triethoxysilane.

A performance test was done on the adhesive in the foregoing experiment 1. The results are shown in Table 2.
Glass transition temperature: SJ-T11197-2013;
Coefficient of thermal expansion (α1): SJ-T11197-2013;
Bending strength: GBT 1449-2005.

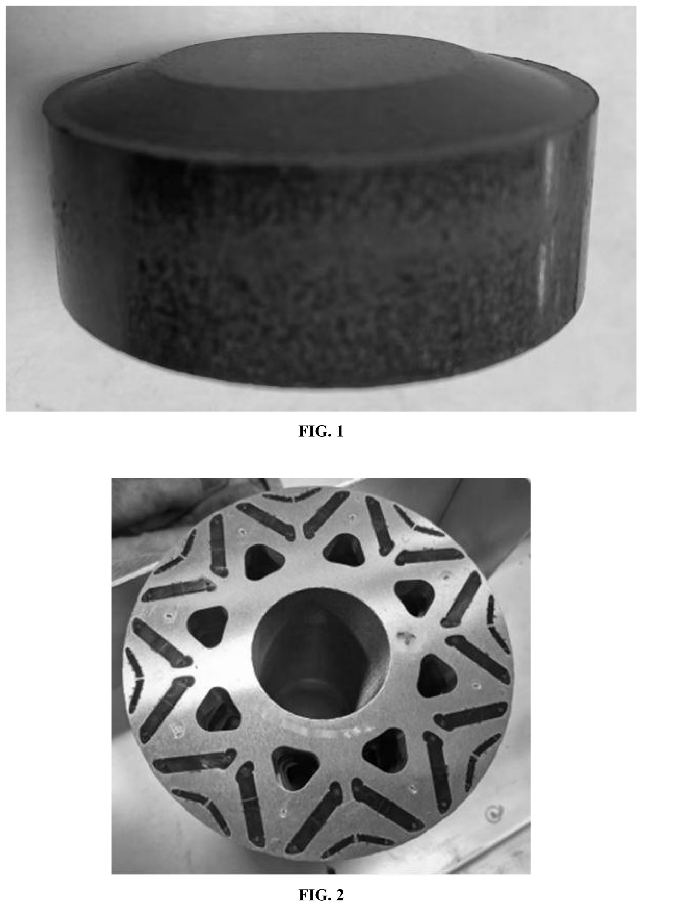

Weigh the raw materials according to the formula shown in Table 1, mix them evenly in an inert atmosphere to obtain powder, heat and mold it, and crush it to obtain a powder product with a particle size of 3-5 mm. Compress the powder into a cylindrical cake (as shown in FIG. 1), preheat the cake by a high-frequency preheater to 90°C, put the preheated cake into a mold, heat it to 190°C so that the plastic part is fused and flowable, apply a pressure of 10MPa through a hydraulic system, squeeze the flowable adhesive into the gap between the magnetic steel and the rotor core (wherein the magnetic steel is arranged by polarity and embedded into the slots of the rotor core, and preheated to 100 °C), ensure that the material is evenly coated on the surface of the magnetic steel and fills the slot body, and control the extrusion speed within the range of 10~20 mm/s. The mold temperature was controlled at 150°C and cured for 10min to form a high-strength cross-linked structure (the finished product is shown in FIG. 2). The magnetic flux was tested by referring to IEC 60404. The overall magnetic flux of the rotor after magnetization was determined. The magnetic flux testing method was IEC 60404, and the test temperature was 180°C.

**Table 2 Performance Test of the Magnetic Adhesive for Motor Rotor**

| Item | Glass transition temperature (°C) | Coefficient of thermal expansion (α1) (10⁻⁶/ °C) | Bending strength (MPa) | Magnetic flux (including equal amounts of iron core and magnetic steel) (mT) |
|---|---|---|---|---|
| Comparative example 1 | 172 | 17 | 137 | 148 |
| Comparative example 2 | 171 | 16 | 136 | 155 |
| Comparative example 3 | 174 | 17 | 137 | 158 |
| Comparative example 4 | 173 | 16 | 136 | 169 |
| 1-1 | 172 | 16 | 127 | 178 |
| 1-2 | 174 | 16 | 122 | 177 |
| 1-3 | 172 | 17 | 130 | 180 |
| 1-4 | 173 | 16 | 137 | 178 |
| 1-5 | 172 | 17 | 133 | 179 |
| 1-6 | 171 | 16 | 130 | 178 |
| 1-7 | 174 | 18 | 135 | 190 |
| 1-8 | 175 | 20 | 133 | 197 |
| 1-9 | 177 | 21 | 129 | 205 |
| 1-10 | 179 | 23 | 123 | 221 |
| 1-11 | 176 | 28 | 136 | 185 |
| 1-12 | 173 | 18 | 134 | 182 |

From the above experimental data, it can be seen that after adding NdFeB magnetic powder, the magnetic flux of the system can be increased, without significant impact on bending strength and the coefficient of thermal expansion. The magnetic flux can be increased while maintaining good mechanical strength as far as possible. However, considering the mechanical properties and cost, the total mass of added magnetic materials should not exceed 30% of the total mass, and preferably not more than 20% of the total mass. It should be noted that in the above materials, the amount of the filler component (which is the sum of the magnetic flux component and the non-magnetic flux component) should be controlled within a range of 75%~90% of the total weight. If the amount of the filler component added is too high, it will result in a deterioration of the internal bonding performance of the system. If the amount is too low, it will lead to insufficient hardness of the system. The compounding of multiple non-magnetic fillers, i.e., compounding and mixing of fused spherical silica, fused angular silica, and fine silica in specific sizes and proportions, can work together to improve the magnetic flux of the fixing material at high temperatures after the addition of magnetic powder. By comparing samples 1-7 and 1-12, it was found that the addition of epoxy silane coupling agent could further increase the magnetic flux.

### Experiment 2

After considering the experimental groups in Experiment 1 comprehensively, the experimental group 1-7 with the best overall performance was selected. On this basis, the amount and type of non-magnetic filler, i.e., silica, were screened. In order to adjust the mass ratios and sizes of the three types of silica (fused spherical silica, fused angular silica and fine silica), the ratios and types of other components remained unchanged. The details are shown in Table 3.

In sample 2-5, the D50 of the fused spherical silica (a1) was 5.1 µm, and the D50 of the fused angular silica (b1) was 15.0 µm; in sample 2-6, the D50 of the fused spherical silica (a2) was 8.7 µm, and the D50 of the fused angular silica (b2) was 20.3 µm; in the comparative example 5, the D50 of the fused spherical silica (a3) was 4.2 µm, and the D50 of the fused angular silica (b3) is 13.5 µm; in the comparative sample 6, the D50 of the fused spherical silica (a4) was 10.0 µm, and the D50 of the fused angular silica (b4) was 25.0 µm.

**Table 3 Formula of the Magnetic Adhesive for Motor Rotor**

| Component (pbw) | 1-7 | 2-1 | 2-2 | 2-3 | 2-4 | 2-5 | 2-6 | Compar ative example 6 | Compara tive example 7 |
|---|---|---|---|---|---|---|---|---|---|
| Epoxy resin 1 | 9.88 | 9.88 | 9.88 | 9.88 | 9.88 | 9.88 | 9.88 | 9.88 | 9.88 |
| Epoxy resin 2 | 2.00 | 2.00 | 2.00 | 2.00 | 2.00 | 2.00 | 2.00 | 2.00 | 2.00 |
| Phenolic resin 1 | 0.40 | 0.40 | 0.40 | 0.40 | 0.40 | 0.40 | 0.40 | 0.40 | 0.40 |
| Phenolic resin 2 | 0.80 | 0.80 | 0.80 | 0.80 | 0.80 | 0.80 | 0.80 | 0.80 | 0.80 |
| Curing accelerator | 0.14 | 0.14 | 0.14 | 0.14 | 0.14 | 0.14 | 0.14 | 0.14 | 0.14 |
| fused spherical silica | **21** | **18** | **30** | **26** | **15** | **21(a1)** | **21(a2)** | **21(a3)** | **21(a4)** |
| fused angular silica | **50** | **53** | **40** | **45** | **55** | **50(b1)** | **50(b2)** | **50(b3)** | **50(b4)** |
| fine silica | 6 | 6 | 6 | 6 | 6 | 6 | 6 | 6 | 6 |
| Sintered NdFeB magnetic powder | 10 | 10 | 10 | 10 | 10 | 10 | 10 | 10 | 10 |
| SmCo magnetic powder | - | - | - | - | - | - | - | - | - |
| Silane coupling agent | 1.5 | 1.5 | 1.5 | 1.5 | 1.5 | 1.5 | 1.5 | 1.5 | 1.5 |
| Ion catcher | 0.47 | 0.47 | 0.47 | 0.47 | 0.47 | 0.47 | 0.47 | 0.47 | 0.47 |
| Release agent | 1.18 | 1.18 | 1.18 | 1.18 | 1.18 | 1.18 | 1.18 | 1.18 | 1.18 |
| Flame retardant | 3.00 | 3.00 | 3.00 | 3.00 | 3.00 | 3.00 | 3.00 | 3.00 | 3.00 |
| Coloring agent | 0.30 | 0.30 | 0.30 | 0.30 | 0.30 | 0.30 | 0.30 | 0.30 | 0.30 |
| Toughening agent | 0.15 | 0.15 | 0.15 | 0.15 | 0.15 | 0.15 | 0.15 | 0.15 | 0.15 |

A performance test was done on the magnetic fixing material for the rotor of each motor in Table 3. The results are shown in Table 4. The differences in the glass transition temperature and the coefficient of thermal expansion were very small, so they are not included in Table 4.

**Table 4 Performance Test of the Magnetic Adhesive for Motor Rotor**

| Item | Bending strength(MPa) | Magnetic flux (including equal amounts of iron core and magnetic steel) (mT) |
|---|---|---|
| 1-7 | 135 | 190 |
| 2-1 | 132 | 184 |
| 2-2 | 137 | 178 |
| 2-3 | 136 | 183 |
| 2-4 | 135 | 181 |
| 2-5 | 135 | 185 |
| 2-6 | 133 | 186 |
| Comparative example 6 | 136 | 175 |
| Comparative example 7 | 134 | 174 |

Based on the above experimental results, by adjusting the composition of silica, a relatively better magnetic flux can be obtained without changing the amount of magnetic material added. However, it is necessary to control the particle size of the fused spherical silica and the fused angular silica to effectively improve the magnetic flux of the adhesive at high temperatures.

### Experiment 3

The other experiments are the same as Experiment 1. Experiment 3 attempted to use a mixture of sintered NdFeB magnetic powder and SmCo magnetic powder as the magnetic powder. The formulation is shown in Table 5 below. The size of the used boron nitride nanosheets is approximately 300±50 nm, and the thickness is approximately 30 nm.

**Table 5 Formula of the Magnetic Adhesive for Motor Rotor**

| Component (pbw) | 3-0 | 3-1 | 3-2 | 3-3 | 3-4 | 3-5 |
|---|---|---|---|---|---|---|
| Epoxy resin 1 | 9.88 | 9.88 | 9.88 | 9.88 | 9.88 | 9.88 |
| Epoxy resin 2 | 2.00 | 2.00 | 2.00 | 2.00 | 2.00 | 2.00 |
| Phenolic resin 1 | 0.40 | 0.40 | 0.40 | 0.40 | 0.40 | 0.40 |
| Phenolic resin 2 | 0.80 | 0.80 | 0.80 | 0.80 | 0.80 | 0.80 |
| Curing accelerator | 0.14 | 0.14 | 0.14 | 0.14 | 0.14 | 0.14 |
| fused spherical silica | 21 | 21 | 21 | 21 | 21 | 21 |
| fused angular silica | 50 | 50 | 50 | 50 | 50 | 50 |
| fine silica | 6 | 6 | 6 | 6 | 6 | 6 |
| Sintered NdFeB magnetic powder | **5** | **5** | **5** | **5** | **2.5** | **7.5** |
| SmCo magnetic powder | **5** | **5** | **5** | **5** | **7.5** | **2.5** |
| Boron nitride nanosheets | **0** | **2.2** | **3.0** | **2.5** | **2.5** | **2.5** |
| Silane coupling agent | 1.5 | 1.5 | 1.5 | 1.5 | 1.5 | 1.5 |
| Ion catcher | 0.47 | 0.47 | 0.47 | 0.47 | 0.47 | 0.47 |
| Release agent | 1.18 | 1.18 | 1.18 | 1.18 | 1.18 | 1.18 |
| Flame retardant | 3.00 | 3.00 | 3.00 | 3.00 | 3.00 | 3.00 |
| Coloring agent | 0.30 | 0.30 | 0.30 | 0.30 | 0.30 | 0.30 |
| Toughening agent | 0.15 | 0.15 | 0.15 | 0.15 | 0.15 | 0.15 |

A performance test was done on the magnetic fixing material for the rotor of each motor in Table 5. The results are shown in Table 6. The differences in the glass transition temperature and the coefficient of thermal expansion were very small, so they are not included in Table 6.

**Table 6 Performance Test of the Magnetic Adhesive for Motor Rotor**

| Item | Bending strength(MPa) | Magnetic flux (including equal amounts of iron core and magnetic steel) (mT) |
|---|---|---|
| 3-0 | 133 | 178 |
| 3-1 | 133 | 203 |
| 3-2 | 134 | 199 |
| 3-3 | 133 | 205 |
| 3-4 | 132 | 201 |
| 3-5 | 133 | 196 |

It can be seen that when both the sintered NdFeB magnetic powder and the SmCo magnetic powder were added simultaneously, the magnetic flux would decrease. Only by adding boron nitride nanosheets could the high-temperature magnetic flux be significantly increased.

## Claims

1. A magnetic adhesive for motor rotor that improves magnetic flux at high temperatures, **characterized by** comprising the following percent by weight of raw materials: 5-15 percent of epoxy resin, 1-3 percent of phenolic resin, 0.5-2 percent of curing accelerator, 15-30 percent of fused spherical silica, 40-60 percent of fused angular silica, 4-10 percent of fine silica, and 3-30 percent of magnetic powder; wherein the D50 of the fused spherical silica is 5-9 µm, the D50 of the fused angular silica is 15-21 µm, and the specific surface area of the fine silica is 230-280 m²/g; the magnetic powder comprises at least one of sintered neodymium iron boron (NdFeB) material and samarium cobalt (SmCo) material; the sintered NdFeB material is obtained by calcining an NdFeB material at 1100-1300°C for 3-5 h, and then tempering it at 500-600°C for 1-2 h.

2. The magnetic adhesive for motor rotor according to claim 1, **characterized by** comprising the following percent by weight of raw materials: 9-13 percent of epoxy resin, 1.2-1.7 percent of phenolic resin, 0.8-1.3 percent of curing accelerator, 18-26 percent of fused spherical silica, 45-55 percent of fused angular silica, 5-8 percent of fine silica, 1-3 percent of silane coupling agent and 5-20 percent of magnetic powder.

3. The magnetic adhesive for motor rotor according to claim 1, **characterized in that** the magnetic powder comprises a mixture of the sintered NdFeB material and the SmCo material; and when the mixture of the sintered NdFeB material and the SmCo material is added, the raw materials of the magnetic adhesive for motor rotor also comprise 2.2-3.0 percent by weight of boron nitride nanosheets.

4. The magnetic adhesive for motor rotor according to claim 3, **characterized in that** in the magnetic powder, the mass ratio of the sintered NdFeB material to the SmCo material is 1:1-3; the size of the boron nitride nanosheets is 100-500 nm, and its thickness is 10-50 nm.

5. The magnetic adhesive for motor rotor according to claim 1, **characterized in that** the epoxy resin is at least one of phenolic epoxy resin, bisphenol type epoxy resin, biphenyl type epoxy resin, and bis-cyclopentadiene type epoxy resin; the phenolic resin is at least one of linear phenolic resin, biphenyl type phenolic resin, naphthalene type phenolic resin, polyphenylene nitrile type phenolic resin, and arylalkylphenol type phenolic resin; and the curing accelerator is selected from imidazole type accelerator and tertiary amine type accelerator.

6. The magnetic adhesive for motor rotor according to claim 1, **characterized by** further comprising the following percent by weight of excipients: 0-2 percent of ion catcher, 0-2 percent of release agent, 0-5 percent of flame retardant, 0-2 percent of toughening agent, and 0-5 percent of coloring agent, and the percent by weight of the aforesaid excipients are not all 0.

7. A method for preparing the magnetic adhesive for motor rotor that improves magnetic flux at high temperatures according to any one of claims 1-6, **characterized by** comprising the following steps:
weighing the raw materials according to their percent by weight, mixing them evenly in an inert atmosphere to obtain powder, heating and molding it, and crushing it to obtain a powder product with a particle size of 1-10 mm.

8. A motor rotor, **characterized by** comprising a rotor body, magnetic steel, and the magnetic adhesive for motor rotor according to any one of claims 1-6 that is used to fix the rotor body and the magnetic steel.
